# FASCICULE DE BREVET EUROPEEN

(11) **EP 2 704 725 B1**
(45) Date de publication et mention de la délivrance du brevet: **18.03.2015**
(21) Numéro de dépôt: 12731078.7
(22) Date de dépôt: 28.05.2012
(51) Int. Cl.: A61K 31/702, C07H 3/06, A23G 3/38, A23G 3/42

(54) **BONBON DE SUCRE CUIT COMPRENANT DES -GALACTO-OLIGOSACCHARIDES NON FRUCTOSYLÉS**
SÜSSWARE AUS GEKOCHTEM ZUCKER MIT NICHTFRUCTOSYLIERTEN ALPHA-GALACTOOLIGOSACCHARIDEN
BOILED SUGAR SWEET COMPRISING NON-FRUCTOSYLATED -GALACTOOLIGOSACCHARIDES

(30) Priorité: 19.07.2011 FR 1156555
(43) Date de publication de la demande: 12.03.2014
(73) Titulaire: Olygose, 60280 Venette (FR)
(72) Inventeur: DELBAERE, François, F-60201 Compiegne (FR)
(74) Mandataire: Louiset, Raphael
(86) Numéro de dépôt international: PCT/FR2012/051192
(87) Numéro de publication internationale: WO 2013/011216

(56) Documents cités:
- EP-A1- 0 518 770
- EP-A1- 0 611 527
- EP-A2- 0 094 292
- EP-A2- 0 720 819
- WO-A1-2010/109093
- FR-A1- 2 846 518
- DATABASE GNPD [Online] Mintel; juin 2011 (2011-06), Anonymous: "Sugar Syrup with oligosaccharide", XP002667896, Database accession no. 1581907
- PARK AH-REUM ET AL: "Galacto-oligosaccharide production using microbial beta-galactosidase: current state and perspectives", APPLIED MICROBIOLOGY AND BIOTECHNOLOGY, vol. 85, no. 5, février 2010 (2010-02), pages 1279-1286, XP002667897, DOI: 10.1007/S00253-009-2356-2

## Description

### Domaine technique

La présente invention concerne des bonbons de sucre cuit comprenant un mélange de sucres constitué de glucose et d'α-galacto-oligosaccharides non fructosylés dans des proportions particulières. Elle a également pour objet un procédé de fabrication de ces bonbons, ainsi que l'utilisation, pour la fabrication d'un bonbon de sucre cuit, d'une composition renfermant le mélange précité.

### Arrière-plan de l'invention

Les bonbons de sucre cuit sont généralement obtenus par déshydratation d'un sirop, en le cuisant à haute température et éventuellement sous pression réduite, puis formation d'une masse cuite après ajout d'arômes, de colorants, etc. Celle-ci est ensuite coulée à chaud dans un moule ou refroidie, formée en boudin, puis estampée ou découpée pour obtenir un bonbon dur présentant un aspect vitreux.

Le sirop utilisé dans la fabrication de ces bonbons peut être constitué de glucides, tels que le saccharose, le dextrose, le fructose, le sirop de glucose (hydrolysat d'amidon comprenant du glucose, du maltose et des oligosaccharides supérieurs) et leurs mélanges, ou de polyols tels que le sorbitol, les sirops de maltitol, le mannitol, le xylitol, l'isomalt, le lactitol, les hydrolysats d'amidon hydrogénés (renfermant du maltitol) et leurs mélanges. Les polyols permettent d'obtenir des bonbons ayant un faible pouvoir calorique et cariogène. Néanmoins, du fait de leur caractère hygroscopique, ils ne permettent pas toujours la fabrication de bonbons stables dans le temps. Les bonbons obtenus à partir de ces polyols, tels que les sirops de maltitol, ont en effet tendance à absorber l'humidité ambiante, ce qui entraîne une liquéfaction de leur surface les rendant collants. Certains présentent aussi un phénomène de fluage responsable d'une déformation du bonbon dans le temps.

Pour remédier à ces problèmes, il a notamment été suggéré d'ajuster la teneur en maltitol du sirop (US-5 314 708) ou la composition du sucre cuit pour obtenir une microcristallisation en surface, permettant de protéger le bonbon vis-à-vis de l'humidité (EP 0 720 819). Pour éviter les phénomènes de grainage, il a également été proposé d'ajouter à la masse cuite des inhibiteurs de cristallisation, tels que certaines dextrines hydrogénées (EP 0 954 982) ou des inhibiteurs de propagation de la cristallisation, tels que le polydextrose (EP 0 611 527). Il a toutefois été observé que, sans emballage hermétique, les bonbons obtenus à partir de ces masses cuites présentaient à la fois une cristallisation superficielle incontrôlée altérant leur texture et le caractère transparent ou translucide des bonbons, ainsi qu'un phénomène de fluage en surface entraînant leur ramollissement. Tel est notamment le cas du sirop de maltitol disponible sous la dénomination commerciale LYCASIN^{®} HBC auprès de la société ROQUETTE.

Dans le cas des hydrolysats d'amidon hydrogénés, il a par ailleurs été suggéré de réduire la reprise en eau et le fluage en ajoutant à la masse cuite des composés tels que la gomme arabique ou la carboxyméthyl cellulose, éventuellement additionnés de mannitol (EP 0 094 292) ou encore de conférer aux bonbons une structure multicouche particulière (EP 0 518 770).

La solution la plus satisfaisante à ce jour pour surmonter les problèmes de reprise en eau et de fluage décrits ci-dessus consiste à fabriquer des bonbons de sucre cuit à base d'isomalt (ou isomaltulose hydrogéné). De fait, ceux-ci représentent près de 80% du marché mondial des bonbons durs. Toutefois, du fait du faible poids moléculaire de l'isomalt, l'obtention de bonbons durs stables dans le temps nécessite de faire bouillir les solutions aqueuses d'isomalt pour atteindre une teneur en eau particulièrement faible dans le produit fini. Or, ceci se traduit par des températures d'ébullition très élevées, qui augmentent le coût énergétique du procédé de fabrication des bonbons et entraînent en outre des temps de refroidissement très longs avant la mise en forme des bonbons à 60-80°C (d'autant plus que la chaleur de fusion de la masse fondue est assez élevée), ce qui nuit également à l'économie du procédé. Par ailleurs, ces températures d'ébullition élevées peuvent être préjudiciables à la stabilité d'actifs sensibles, tels que des vitamines, ou des arômes incorporés dans la composition. Ceux-ci doivent par conséquent être ajoutés ultérieurement à la masse fondue, après son refroidissement.

Surtout, ce procédé conduit à des masses fondues à base d'isomalt ayant une viscosité insuffisante pour fabriquer de bonbons par formage et non par coulage. Pour augmenter leur viscosité, on cuit habituellement les solutions d'isomalt sous vide à plus basse température, ce qui complique le procédé. Une autre solution pour augmenter la viscosité des masses cuites à base d'isomalt, en conservant la stabilité du sucre cuit au stockage, a été proposée dans FR 2 846 518. Elle consiste à substituer une partie de l'isomalt par des maltodextrines branchées particulières. De telles maltodextrines contribuent néanmoins fortement à la coloration des sirops lors de la cuisson des bonbons, même à faible taux d'incorporation.

Des bonbons durs à base de polydextrose hydrogéné sont également disponibles sur le marché. Ils présentent toutefois un arrière-goût amer qui a freiné leur développement commercial. En outre, le polydextrose est classé comme additif alimentaire (agent de charge E1200) dans le *Codex alimentarius,* de sorte qu'il n'est pas possible de l'utiliser pour la préparation de bonbons durs "sans additifs", qui sont de plus en plus demandés par les consommateurs à la recherche de produits naturels.

Il subsiste donc le besoin de proposer une composition de sucre cuit permettant de fabriquer, suivant un procédé simple (ne nécessitant pas, en particulier, de mise sous vide du cuiseur, ni une température de cuisson trop élevée) et ayant une productivité satisfaisante, des bonbons durs non cariogènes ayant de bonnes propriétés organoleptiques et une stabilité dans le temps comparable aux bonbons préparés à base d'isomalt. Il serait également souhaitable que ces bonbons durs puissent être fabriqués par formage et pas uniquement par coulage.

Le document "Galacto-oligosaccharide production using microbial beta-galactosidase: current state and perspectives", dans APPLIED MICROBIOLOGY AND BIOTECHNOLOGY, vol. 85, no. 5, février 2010, pages 1279-1286, divulgue que les galacto-oligosaccharides ont de bonnes propriétés de rétention d'eau, sont stables à de hautes températures et stimulent la croissance des bactéries probiotiques. Ce document divulgue également les galacto-oligosaccharides comme ingrédients fonctionnels, utilisés notamment en tant qu'agents sucrants à faible pouvoir calorique dans les confiseries.

De façon surprenante, les inventeurs ont découvert que ces besoins pouvaient être satisfaits en préparant des bonbons de sucre cuit à partir d'une composition renfermant une combinaison particulière de galacto-oligosaccharides issue notamment de légumineuses.

### Résumé de l'invention

La présente invention a ainsi pour objet un bonbon de sucre cuit comprenant un mélange de sucres constitué, en matière sèche :
- d'au plus 5% en poids de glucose et de fructose,
- de 0 à 30% de DP2,
- d'au moins 30% en poids de DP3,
- d'au plus 60% en poids de DP4+,
où DPn désigne des α-galacto-oligosaccharides non fructosylés ayant un degré de polymérisation égal à n et les pourcentages sont exprimés par rapport au poids du mélange de sucres.

La présente invention a également pour objet l'utilisation, pour la fabrication d'un bonbon de sucre cuit, d'une composition renfermant le mélange de sucres décrit précédemment.

Elle a encore pour objet un procédé de fabrication de bonbons de sucre cuit, comprenant :
a) la préparation d'une composition renfermant un mélange de sucres tel que décrit ci-dessus et présentant un taux de matières sèches compris entre 60 et 85% en poids, de préférence entre 70 et 80% en poids,
b) la cuisson de la composition à une température de 130 à 150°C à pression atmosphérique, ou à plus basse température sous vide,
c) l'ajout d'un ou plusieurs additifs,
d) la récupération de la masse cuite obtenue à l'issue de l'étape (c),
e) la mise en forme des bonbons par coulage ou formage,
f) le refroidissement des bonbons.

### Description détaillée

Comme indiqué précédemment, la présente invention porte sur un bonbon de sucre cuit qui peut être obtenu à partir d'un mélange de sucres renfermant au plus 5% en poids de glucose et de fructose, le reste étant constitué des α-galacto-oligosaccharides non fructosylés (ci-après désignés par « α-GOS ») suivants :
- de 0 à 30% de DP2, tels que le mélibiose, le galactopinitol, le galactinol et les galactosyl-chiro-inositols, dont les fagopyritols A1, A2, B1, B2 et B3,
- au moins 30% en poids de DP3, tels que le manninotriose et le cicéritol,
- au plus 60% en poids de composés de type DP4 et oligosaccharides supérieurs (désignés ensemble par DP4+), tels que le manninotétraose (également désigné par verbascotétraose), de formule Gal₃-Glc, ou le produit Gal₄-Glc qui peut être obtenu par défructosylation de l'ajugose, ainsi que leurs équivalents de taille supérieure, de formule générale Galₙ-Glc.
où DPn désigne des α-galacto-oligosaccharides non fructosylés ayant un degré de polymérisation égal à n et les pourcentages sont exprimés par rapport au poids du mélange de sucres.

Un tel mélange de sucres peut notamment être obtenu à partir d'une source de légumineuses telles que la mélasse de soja, le pois, le pois chiche ou la féverole.

Dans le cas du pois, par exemple, les procédés de séparation de l'amidon, des protéines et des fibres contenus dans les graines de pois (voir notamment WO 2007/017572) génèrent des quantités non négligeables d'effluents constitués d'une fraction soluble de pois, également désignée par "petit lait de pois", traditionnellement utilisée en tant que substrats de fermentation et en nutrition animale. Des concentrés ou isolats liquides de solubles de pois sont également disponibles dans le commerce auprès de la société HEDIMIX sous la dénomination commerciale "Erwteneiwit", de la société EMSLAND sous la dénomination commerciale "Erbsen-Fruchtwasser" ou de la société ROQUETTE sous la dénomination commerciale "Solubles de pois".

Ces différentes fractions solubles de pois contiennent des protéines solubles, des glucides (sucres simples et oligosaccharides) et des minéraux, généralement dans les proportions suivantes, en poids sur matière sèche (représentant elle-même 24-30% en poids de cette fraction soluble) :
Protéines : 30-40%
Minéraux : 14-16% (exprimés en taux de cendres) dont typiquement 65% de chlorure de potassium
Glucides : 25-50%.

Elles peuvent être utilisées pour produire le mélange de sucres utilisé selon l'invention. Pour ce faire, on procède généralement à une centrifugation des solubles de pois, pour obtenir un jus clair (ou surnageant) qui est ensuite soumis à un procédé de séparation des peptides et protéines solubles, notamment par ultrafiltration, puis à des étapes successives de déminéralisation (par nanofiltration, électrodialyse ou échange d'ions), de concentration, d'hydrolyse acide et/ou thermique et/ou enzymatique (par exemple à l'aide d'une levure présentant une activité invertase, issue notamment de *Saccharomyces cerevisiae*) visant à défructosyler les oligo-saccharides et d'élimination des mono-saccharides, notamment par chromatographie ou nanofiltration, pour obtenir un mélange de sucres selon l'invention qui peut être éventuellement concentré avant utilisation.

Un procédé de ce type a notamment été décrit dans la demande WO 2010/109093 à laquelle on pourra se référer pour plus de détails. Ce procédé conduit à un extrait hydrosoluble de pois utilisable comme mélange de sucres selon l'invention, caractérisé en ce qu'il renferme, et de préférence est constitué essentiellement, du mélibiose, du manninotriose et du manninotétraose dans un rapport en poids manninotétraose/mélibiose d'au moins 1:1 et de préférence d'au moins 4:1 voire d'au moins 5:1 (et au maximum d'environ 10:1, par exemple) et/ou un rapport en poids manninotriose/manninotétraose de 0,3:1 à 4:1, de préférence de 0,8:1 à 1:1.

Des procédés similaires peuvent être mis en oeuvre à partir d'autres sources végétales que le pois pour produire le mélange de sucres utilisé selon l'invention.

Ce mélange de sucres est utilisé, dans l'étape (a) du procédé selon l'invention, pour préparer une composition présentant un taux de matières sèches compris entre 60 et 85% en poids, de préférence entre 70 et 80% en poids. Cette concentration vise à assurer la stabilité microbiologique du sirop à température ambiante, tout en maintenant une viscosité compatible avec son pompage. Des concentrations inférieures peuvent être envisagées, mais nécessiteraient de stocker le sirop à 4°C. Cette composition peut ne contenir que le mélange précité et de l'eau. En variante, elle peut également contenir divers additifs, pour autant qu'ils ne se dégradent pas chimiquement ou physiquement aux températures de cuisson utilisées dans l'étape (b) qui constitue l'étape cruciale de ce procédé. Celle-ci peut être conduite sous pression atmosphérique ou sous vide. Dans ce dernier cas, la température pourra être abaissée de quelques dizaines de degrés par rapport à celle utilisée à pression atmosphérique, qui est fonction du profil d'oligosaccharides de la composition et s'échelonne typiquement de 130 à 140°C pour les procédés de fabrication de bonbons coulés et de 135 à 145°C pour les procédés de fabrication de bonbons formés. Les températures de cuisson convenables peuvent être déterminées aisément par l'homme du métier à l'aide de simples opérations de routine. Les autres étapes du procédé ci-dessus sont tout-à-fait classiques et similaires à celles mises en oeuvre dans la fabrication de bonbons cuits à base de mélange saccharose/sirop de glucose, considéré comme la référence des confiseurs.

En particulier, parmi les additifs pouvant être ajoutés à la composition dans l'étape (c) et/ou inclus dans celle-ci à l'étape (a), on peut citer les édulcorants intenses tels que les extraits de Stevia, l'aspartam, l'acésulfame K et le sucralose, ainsi que les colorants, les arômes, les principes actifs à effet antiseptique ou antibiotique, par exemple, et leurs mélanges.

Ce procédé peut être mis en oeuvre en continu, en discontinu ou en semi-continu, dans des appareils classiquement utilisés en confiserie.

Il est bien entendu que le procédé selon l'invention peut être modifié pour inclure des étapes intermédiaires supplémentaires, pour autant qu'elles ne nuisent pas à l'obtention de bonbons présentant de bonnes propriétés organoleptiques. En particulier, il peut être adapté pour obtenir des bonbons fourrés ou multicouches, de manière classique pour l'homme du métier.

L'avantage du procédé selon l'invention est qu'il permet d'obtenir des bonbons durs par formage et éventuellement par coulage, sans avoir recours à des températures de cuisson élevées suivies de temps de refroidissement longs, ni nécessiter de cuisson sous vide de la composition. Au contraire, ce procédé utilise des températures de cuisson relativement basses qui conduisent à des masses fondues suffisamment visqueuses pour être mises en forme sans nécessiter de long refroidissement. Il a ainsi été mis en évidence que la composition utilisée selon l'invention, ajustée à un taux de matières sèches de 70 à 75% en poids, présente une viscosité permettant la formation de bonbons par formage après cuisson à moins de 150°C à pression atmosphérique et éventuellement par coulage après cuisson à moins de 140°C à pression atmosphérique.

En outre, les bonbons obtenus présentent une surface dure et non collante après fabrication, contrairement aux bonbons à base d'isomalt qui présentent une reprise en eau plus élevée après fabrication et nécessitent donc d'être stockés dans des conditions de température et d'humidité contrôlées pendant 24h afin de réduire leur caractère collant. En raison de leur faible hygroscopicité, ces bonbons peuvent en outre être conditionnés dans une boîte ou un sachet, par exemple, sans qu'il ne soit nécessaire de les emballer individuellement.

En particulier, les bonbons selon l'invention présentent les caractéristiques suivantes :
- une augmentation de leur reprise en eau, passé un délai de 5 jours de stockage sans emballage à 20-25°C après leur fabrication, inférieure à 0,15%, voire inférieure à 0,1%, la reprise en eau étant exprimée par la variation du poids de l'échantillon par rapport à son poids initial, et/ou
- une texture superficielle dure et non collante après 24 jours de stockage sans emballage à 20-25°C, et/ou
- une température de transition vitreuse (Tg), mesurée par DSC, supérieure à 35°C, de préférence supérieure à 40°C, voire à 45°C, et/ou
- une teneur en eau, mesurée par la méthode Karl-Fischer, juste après refroidissement et/ou après 24 jours, comprise entre 3 et 6%.

Ces bonbons de sucre cuit peuvent être utilisés dans le domaine alimentaire ou pharmaceutique, notamment comme pastilles pour la gorge.

Ils offrent par ailleurs une excellente source de fibres et une bonne tolérance intestinale et peuvent à ce titre être utilisés comme agent prébiotique.

Par « prébiotique », on entend un composant alimentaire, non digestible, fermenté sélectivement, qui induit des changements spécifiques de la composition et/ou de l'activité de la microflore intestinale, conférant des bénéfices sur la santé et le bien-être de l'hôte (Gibson GR et al., Nutrition Research Reviews, 17 : 259-275, 2004). Le prébiotique peut notamment être considéré comme un aliment pour les bactéries favorables du côlon, telles que les bifidobactéries et les lactobacilles, qui permettent de prévenir les troubles intestinaux, d'améliorer l'absorption des minéraux, de moduler le métabolisme lipidique, et/ou de stimuler le système immunitaire.

L'invention sera maintenant illustrée par les exemples non limitatifs suivants, pris en combinaison avec la Figure annexée qui illustre la courbe de reprise en eau de bonbons selon l'invention et selon l'art antérieur.

### EXEMPLES

### Exemple 1 : Fabrication et évaluation sensorielle de bonbons de sucre cuit selon l'invention

On a préparé des bonbons de sucre cuit à partir de différents mélanges de sucres issus de légumineuses, suivant le procédé général décrit précédemment, et ayant les compositions suivantes (en pourcentages en poids) :
- Base soja : 0% DP1 ; 24% DP2 ; 76% DP3 ; 0% DP4+
- Base pois : 0% DP1 ; 7% DP2 ; 48% DP3 ; 45% DP4+
- Base pois chiche : 0% DP1 ; 6% DP2 ; 88% DP3 (dont cicéritol = 64%) ; 6% DP4+
- Base féverole : 0% DP1 ; 7% DP2 ; 30% DP3 ; 63% DP4+,
- Où DP1 désigne le glucose et DP2, DP3 et DP4+ désignent respectivement des alpha-oligosaccharides non fructosylés de degré de polymérisation égal à 2, égal à 3 et supérieur ou égal à 4.

La cuisson a été effectuée sur plaque chauffante. Les tests de cuisson ont été commencés à 115°C pour tous les sirops, puis la température a été augmentée par paliers de 5°C, jusqu'à atteindre la plus basse température à laquelle les bonbons pouvaient être coulés. Elle a ensuite été à nouveau augmentée jusqu'à obtenir une masse assez visqueuse pour pouvoir fabriquer des bonbons par formage. Les bonbons ainsi obtenus ont été évalués visuellement et au toucher pour évaluer leur collant et leur dureté après 24 jours de conservation sans emballage à 25°C. L'évaluation de la texture plus ou moins dure de la surface des bonbons a été effectuée en exerçant une légère pression sur leur surface, à l'aide d'une spatule en acier inoxydable.

Des bonbons préparés de la même manière à partir de Lycasin^{®} HBC et d'Isomalt ont été utilisés comme témoins.

Les résultats de ces évaluations sont rassemblés dans le Tableau 1 ci-après. Il ressort de ce tableau que les sirops à base d'α-GOS selon l'invention permettent d'obtenir des bonbons par formage à plus basse température que ceux préparés à partir des sirops de l'art antérieur. En outre, les bonbons obtenus sont aussi durs et aussi peu collants que ceux de l'art antérieur.

### Exemple 2 : Test de reprise en eau

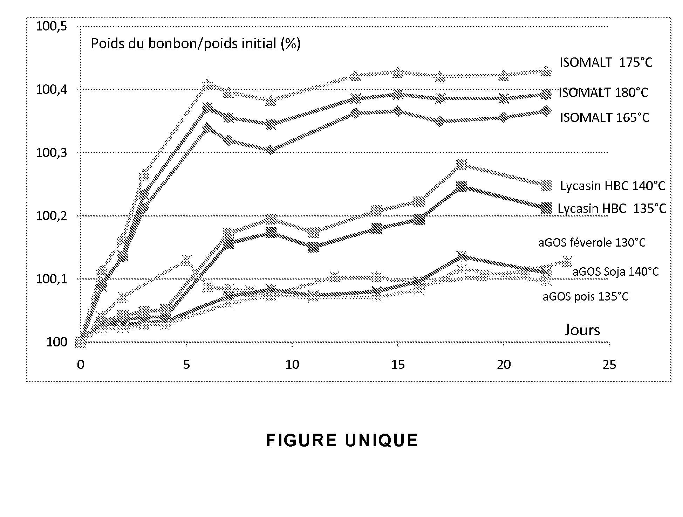

On a évalué deux échantillons de chacun des bonbons coulés obtenus comme décrit à l'Exemple 1 et conservés pendant 24 jours sans emballage à 25°C. Chaque bonbon a été pesé après fabrication, puis tous les jours pendant 4 jours et enfin tous les 2 ou 3 jours. La figure 1 montre les résultats obtenus pour les bonbons jugés durs et non collants ou légèrement collants selon l'Exemple 1.

Sur cette figure, on observe au départ une reprise en eau importante des bonbons à l'isomalt, qui s'arrête totalement par la suite. Ce phénomène est bien connu de l'homme de l'art, et correspond à la reprise en eau nécessaire à la formation des cristaux de surface qui forment rapidement une protection très efficace contre la reprise en eau. Un phénomène similaire est observable avec le Lycasin^{®} HBC, avec une reprise en eau rapide au départ, puis un ralentissement, mais au contraire de l'isomalt, une certaine hygroscopicité se maintient tout au long du stockage, qui contribue à ramollir les bonbons.

Au contraire, les bonbons à base d'α-GOS selon l'invention montrent une très faible hygroscopicité, qui se traduit par une reprise en eau plus faible que celle obtenue avec les bonbons de l'art antérieur, mais celle-ci ne semble pas due à la formation d'une couche cristalline sur la surface, qui reste parfaitement brillante au contraire des bonbons de l'art antérieur.

**Tableau 1**

| Sirop utilisé | Températures de coulage | Températures de formage | Collant | Dureté (texture) |
|---|---|---|---|---|
| Lycasin^{®} HBC | 120-150°C | 150-155°C | 120-130°C : fondus | Molle ou souple |
| | | | 135°C : collants | |
| | | | 140°C : légèrement collants | |
| | | | 145-155°C : non collants | |
| Isomalt | 120-190°C | 190°C | 120-135°C : fondus | 140-155°C : souple |
| | | | 140-150°C : collants | 160-180°C : assez dure |
| | | | 155°C : légèrement collants | 185-190°C : dure |
| | | | 160-190°C : non collants | |
| Base soja | 120-140°C | 140-145°C | 120-130°C : fondus | 135°C : souple |
| | | | 135°C : collants | 140°C : assez dure |
| | | | 140°C : légèrement collants | 145°C : dure |
| | | | 145°C : non collants | |
| Base pois chiche | 120-135°C | 135-140°C | 120-125°C : fondus | 130°C : souple |
| | | | 130°C : collants | 135°C : assez dure |
| | | | 135°C : légèrement collants | 140°C : dure |
| | | | 140°C : non collants | |
| Base pois | 120-130°C | 130-140°C | 120°C : fondus | 125°C : souple |
| | | | 125°C : collants | 130°C : assez dure |
| | | | 130°C : légèrement collants | 135-140°C : dure |
| | | | 135-140°C : non collants | |
| Base féverole | 120-125°C | 125-135°C | 120°C : fondus | 125°C : souple |
| | | | 125°C : collants | 130°C : assez dure |
| | | | 130°C : légèrement collants | 135°C : dure |
| | | | 135°C : non collants | |

### Exemple 3 : Mesure de la température de transition vitreuse

Des analyses de température de transition vitreuse (Tg) ont été effectuées par DSC sur deux échantillons de bonbons stables obtenus suivant l'Exemple 1, à partir de compositions selon l'invention présentant des profils différents de DPn, situés aux extrémités des plages décrites précédemment.

La mesure de la Tg permet de prédire le comportement des bonbons à leur température de stockage habituelle. En effet, lorsque la Tg est inférieure à la température de stockage, on observe un phénomène de fluage à froid qui peut se produire même en l'absence de reprise en eau.

Les résultats de ces mesures sont présentés dans le Tableau 2 ci-dessous.

**Tableau 2**

| Sirop utilisé | Température de cuisson (°C) | Tg (°C) |
|---|---|---|
| Base féverole | 135 | 46,2 |
| Base soja | 145 | 47,2 |

Il apparaît donc que les bonbons obtenus à partir de compositions d'α-GOS selon l'invention présentent une Tg supérieure à 40°C qui permet d'écarter tout risque de fluage à froid et garantit que ces bonbons conserveront une surface dure au stockage.

### Exemple 4 : Recettes de bonbons selon l'invention

On a préparé, de manière classique pour l'homme du métier, des bonbons durs ayant la composition suivante :

### Bonbons arôme fruits rouges/prune

| | |
|---|---|
| Base soja 1⁽¹⁾ | 50 g |
| Monohydrate d'acide citrique | 175 mg |
| Arôme fruits rouges | 110 mg |
| Arôme prune | 130 mg |
| Colorant naturel carmin | 70 mg |
| Edulcorant intense⁽²⁾ | 10 mg |

| | |
|---|---|
| (1) Selon l'Exemple 1 (2) OnlySweet FAKW 945 Stevia modifyer (WILD FLAVORS INC.) | |

### Bonbons arôme pamplemousse

| | |
|---|---|
| Base pois⁽³⁾ | 50 g |
| Monohydrate d'acide citrique | 350 mg |
| Arôme pamplemousse | 150 mg |
| Colorant naturel | 10 mg |
| Edulcorant intense⁽⁴⁾ | 10 mg |

| | |
|---|---|
| (3) Selon l'Exemple 1 (4) OnlySweet FAKW 945 Stevia modifyer (WILD FLAVORS INC.) | |

Pour ce faire, les sirops d'oligosaccharides ont été cuits à 155°C, avant d'ajouter l'acide citrique, l'édulcorant, l'arôme et le colorant, puis l'ensemble a été coulé dans des moules. Les bonbons obtenus pèsent environ 3,5 g et renferment de 76 à 93% de fibres pour une valeur calorique de moins de 8 Cal / bonbon.

## Revendications

1. Bonbon de sucre cuit comprenant un mélange de sucres constitué, en matière sèche :
- d'au plus 5% en poids de glucose et de fructose,
- de 0 à 30% de DP2,
- d'au moins 30% en poids de DP3,
- d'au plus 60% en poids de DP4+,
où DPn désigne des α-galacto-oligosaccharides non fructosylés ayant un degré de polymérisation égal à n et les pourcentages sont exprimés par rapport au poids du mélange de sucres.

2. Bonbon selon la revendication 1, **caractérisé en ce qu'**il est obtenu à partir d'une source de légumineuses telles que la mélasse de soja, le pois, le pois chiche ou la féverole.

3. Bonbon selon l'une des revendications 1 et 2, **caractérisé en ce qu'**il présente :
- une augmentation de sa reprise en eau, passé un délai de 5 jours de stockage sans emballage à 20-25°C après sa fabrication, inférieure à 0,15%, voire inférieure à 0,1%, la reprise en eau étant exprimée par la variation du poids de l'échantillon par rapport à son poids initial, et/ou
- une texture superficielle dure et non collante après 24 jours de stockage sans emballage à 20-25°C, et/ou
- une température de transition vitreuse (Tg), mesurée par DSC, supérieure à 35°C, de préférence supérieure à 40°C, voire à 45°C, et/ou
- une teneur en eau, mesurée par la méthode Karl-Fischer, juste après refroidissement et/ou après 24 jours, comprise entre 3 et 6%.

4. Procédé de fabrication de bonbons de sucre cuit selon la revendication 1, comprenant :
a) la préparation d'une composition renfermant un mélange de sucres tel que décrit dans la revendication 1, ladite composition présentant un taux de matières sèches compris entre 60 et 85% en poids, de préférence entre 70 et 80% en poids,
b) la cuisson de la composition à une température de 130 à 150°C à pression atmosphérique, ou à plus basse température sous vide,
c) l'ajout d'un ou plusieurs additifs,
d) la récupération de la masse cuite obtenue à l'issue de l'étape (c),
e) la mise en forme des bonbons par coulage ou formage,
f) le refroidissement des bonbons.

5. Procédé selon la revendication 4, **caractérisé en ce que** la température de cuisson est comprise entre 130 et 140°C pour les procédés de fabrication de bonbons coulés et entre 135 et 145°C pour les procédés de fabrication de bonbons formés.

6. Utilisation, pour la fabrication d'un bonbon de sucre cuit, d'une composition renfermant un mélange de sucres constitué, en matière sèche :
- d'au plus 5% en poids de glucose,
- de 0 à 30% de DP2,
- d'au moins 30% en poids de DP3,
- d'au plus 60% en poids de DP4+,
où DPn désigne des α-galacto-oligosaccharides non fructosylés ayant un degré de polymérisation égal à n et les pourcentages sont exprimés par rapport au poids du mélange de sucres.

## Patentansprüche

1. Hartbonbon, umfassend ein Gemisch von Zuckern, das, bezogen auf die Trockenmasse, aus Folgendem besteht:
- höchstens 5 Gew.-% Glucose und Fructose,
- 0 bis 30 % PG2,
- mindestens 30 Gew.-% PG3,
- höchstens 60 Gew.-% PG4+,
wobei PGn für nicht-fructosylierte α-Galacto-Oligosaccharide mit einem Polymerisationsgrad gleich n steht und wobei die Prozentangaben bezogen auf das Gewicht des Zuckergemischs angegeben sind.

2. Bonbon nach Anspruch 1, **dadurch gekennzeichnet, dass** es ausgehend von einer Leguminosen-Quelle, wie Soja-Melasse, Erbse, Kichererbse oder Bohne, erhalten wird.

3. Bonbon nach einem der Ansprüche 1 und 2, **dadurch gekennzeichnet, dass** es Folgendes aufweist:
- eine Erhöhung seiner Wasseraufnahme nach einem Zeitraum von 5 Tagen der Lagerung ohne Verpackung bei 20-25°C nach seiner Herstellung von weniger als 0,15%, sogar weniger als 0,1%, wobei die Wasseraufnahme als Gewichtsveränderung der Probe in Bezug auf ihr Anfangsgewicht ausgedrückt wird, und/oder
- eine harte und nichtklebrige Oberflächentextur nach 24-tägiger Lagerung ohne Verpackung bei 20-25°C, und/oder
- eine mittels DSC gemessene Glasübergangstemperatur (Tg) von mehr als 35°C, vorzugsweise mehr als 40°C, sogar mehr als 45°C, und/oder
- einen mit dem Karl-Fischer-Verfahren gemessenen Wassergehalt unmittelbar nach Abkühlen und/oder nach 24 Tagen zwischen 3 und 6 %.

4. Verfahren zur Herstellung von Hartbonbons nach Anspruch 1, umfassend:
a) Herstellung einer Zusammensetzung, die ein Gemisch von Zuckern, wie in Anspruch 1 beschrieben, enthält, wobei die Zusammensetzung einen Gehalt an Trockensubstanz zwischen 60 und 85 Gew.-%, vorzugsweise zwischen 70 und 80 Gew.-% aufweist,
b) Kochen der Zusammensetzung bei einer Temperatur von 130 bis 150°C unter Atmosphärendruck oder bei niedrigerer Temperatur unter Vakuum,
c) Zugabe von einem oder mehreren Zusatzstoffen,
d) Gewinnen der gekochten Masse, die nach Schritt c) erhalten wird,
e) Formen von Bonbons durch Gießen oder Formen,
f) Abkühlen der Bonbons.

5. Verfahren nach Anspruch 4, **dadurch gekennzeichnet, dass** die Kochtemperatur zwischen 130 und 140°C bei den Verfahren zur Herstellung von gegossenen Bonbons und zwischen 135 und 145°C bei den Verfahren zur Herstellung von geformten Bonbons beträgt.

6. Verwendung, zur Herstellung eines Hartbonbons, einer Zusammensetzung, die ein Gemisch von Zuckern enthält, das, bezogen auf die Trockenmasse, aus Folgendem besteht:
- höchstens 5 Gew.-% Glucose,
- 0 bis 30 % PG2,
- mindestens 30 Gew.-% PG3,
- höchstens 60 Gew.-% PG4+,
wobei PGn für nicht-fructosylierte α-Galacto-Oligosaccharide mit einem Polymerisationsgrad gleich n steht und wobei die Prozentangaben bezogen auf das Gewicht des Zuckergemischs angegeben sind.

## Claims

1. Boiled sugar sweet comprising a mixture of sugars consisting, with respect to dry matter:
- of at most 5% by weight of glucose and of fructose,
- of 0 to 30% by weight of DP2,
- of at least 30% by weight of DP3,
- of at most 60% by weight of DP4+,
where DPn denotes non-fructosilated α-glactooligosaccharides having a degree of polymerisation equal to n and the percentages are expressed relative to the weight of the mixture of sugars.

2. Sweet according to Claim 1, **characterized in that** it is obtained from a source of leguminous plant such as soy molasses, pea, chickpea or horse bean.

3. Sweet according to either of Claims 1 and 2, **characterized in that** it exhibits:
- an increase in its water uptake, after a period of 5 days of storage without wrapping at 20-25°C has passed after its production, of less than 0.15%, or even less than 0.1%, the water uptake being expressed by the variation in the weight of the sample relative to its initial weight, and/or
- a hard and non-sticky surface texture after 24 hours of storage without wrapping at 20-25°C, and/or
- a glass transition temperature (Tg), measured by DSC, of greater than 35°C, preferably greater than 40°C, or even 45°C, and/or
- a water content, measured by the Karl-Fischer method, just after cooling and/or after 24 hours, of between 3% and 6%.

4. Process for producing boiled sugar sweets according to Claim 1, comprising:
a) preparing a composition containing a mixture of sugars as described in Claim 1, said composition having a dry matter content of between 60% and 85% by weight, preferably between 70% and 80% by weight,
b) boiling the composition at a temperature of 130 to 150°C at atmospheric pressure, or at a lower temperature under vacuum,
c) adding one or more additives,
d) recovering the massecuite obtained at the end of step (c),
e) shaping the sweets by casting or forming,
f) cooling the sweets.

5. Process according to Claim 4, **characterized in that** the boiling temperature is between 130 and 140°C for the processes for producing cast sweets and between 135 and 145°C for the processes for producing formed sweets.

6. Use, for producing a boiled sugar sweet, or a composition containing a mixture of sugars consisting, with respect to dry matter:
- of at most 5% by weight of glucose,
- of 0 to 30% of DP2,
- of at least 30% by weight of DP3,
- of at most 60% by weight of DP4+,
where DPn denotes non-fructosilated α-galactooligosaccharides having a degree of polymerisation equal to n and the percentages are expressed relative to the weight of the mixture of sugars.
